# EUROPÄISCHE PATENTSCHRIFT

(11) **EP 2 766 628 B1**
(45) Veröffentlichungstag und Bekanntmachung des Hinweises auf die Patenterteilung: **14.03.2018**
(21) Anmeldenummer: 12772293.2
(22) Anmeldetag: 04.10.2012
(51) Int. Cl.: F16D 65/56, F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 10.10.2011 DE 102011115464
(43) Veröffentlichungstag der Anmeldung: 20.08.2014
(73) Patentinhaber: KNORR-BREMSE Systeme für Nutzfahrzeuge GmbH, 80809 München (DE)
(72) Erfinder: WEBER, Ralf, 80992 München (DE); KLINGNER, Matthias, 82272 Moorenweis (DE)
(86) Internationale Anmeldenummer: PCT/EP2012/069656
(87) Internationale Veröffentlichungsnummer: WO 2013/053637

(56) Entgegenhaltungen:
- EP-A1- 2 557 331
- WO-A1-2013/029983
- DE-A1- 4 020 189
- DE-A1- 4 034 165
- DE-U1- 8 718 084

## Beschreibung

Die Erfindung betrifft eine Scheibenbremse für ein Nutzfahrzeug nach dem Oberbegriff des Anspruchs 1.

Bei einer aus der DE 94 22 342 U1 bekannten Scheibenbremse wirkt ein Drehhebel auf eine in einem Bremssattel positionierte Brücke ein, in der zwei Stellspindeln gelagert sind, die jeweils ein Druckstück zur Aufnahme eines aus einer Belagträgerplatte und einem daran befestigten Reibbelag bestehenden Bremsbelag aufweisen, der bei einer Bremsung an eine Bremsscheibe angedrückt wird. Die beiden Stellspindeln sind mit einem Außengewinde versehen und jeweils in eine Gewindebohrung der Brücke eingeschraubt.

Mit einer Nachstelleinrichtung, die einer der Stellspindeln zugeordnet ist, wird durch Verdrehen der Stellspindeln in den Gewindebohrungen bei Verschleiß des Reibbelages der Bremsbelag so weit zugestellt, dass ein Lüftspiel zwischen dem Bremsbelag und der Bremsscheibe im Wesentlichen immer konstant bleibt. Hierzu wird ein konzentrisch in einer der Stellspindeln angeordneter Nachsteller über ein Antriebselement vom Bremshebel angetrieben.

Da aber dieser Nachsteller lediglich in einer Stellspindel positioniert ist, die Nachstellung des Bremsbelages jedoch gleichmäßig erfolgen soll und damit auch die zweite Stellspindel entsprechend verstellt werden muss, ist ein vorzugsweise formschlüssiger Zugmitteltrieb vorgesehen, der die Drehbewegung der einen Stellspindel auf die andere synchron überträgt. Als Zugmittel wird beispielsweise eine Gliederkette eingesetzt, die auf Kettenrädern der Stellspindeln umlaufend geführt ist. Bekannt ist auch der Einsatz eines Zahnriemens, der dann in Eingriff mit Zahnrädern steht.

Die bekannten Konstruktionen haben jedoch allesamt den Nachteil, dass der Zugmitteltrieb, also die Synchronisiereinrichtung außerhalb des Bremssattels angeordnet ist, wobei, um sowohl die Synchronisiereinrichtung vor Witterungseinflüssen zu schützen, wie auch Durchtrittsöffnungen im Bremssattel hin zu den Stellspindeln abzudichten, ist üblicherweise ein die Synchroneinrichtung überdeckender Verschlussdeckel vorgesehen.

Zu dessen Befestigung, aber auch zur Abdichtung gegenüber dem Bremssattel sind relativ aufwändige Maßnahmen erforderlich, die nur mit entsprechend kostenintensiven Fertigungsschritten realisierbar sind.

Darüber hinaus baut die Synchronisiereinrichtung und der diese überdeckende Verschlussdeckel auf den Bremssattel auf und steht somit der ständigen Forderung nach einer Minimierung der Baumaße entgegen.

In der DE 87 18 084 U1 ebenso wie in der DE 40 20 189 A1 ist jeweils eine Scheibenbremse offenbart, bei der die Synchroneinrichtung im Innern des Bremssattels angeordnet ist und zwar auf der dem zugeordneten Bremsbelag abgewandten Seite, der Brücke benachbart. Dabei ist das jeweilige Treibrad formschlüssig an einer zugeordneten Stellspindel angeschlossen, wozu Formschlusselemente in eine außenseitige Axialführung der jeweiligen Stellspindel eingreifen.

Der Erfindung liegt die Aufgabe zugrunde, eine Scheibenbremse der gattungsgemäßen Art so weiterzuentwickeln, dass sie einfacher und kostengünstiger herstellbar ist und ihre Abmessungen minimiert werden.

Diese Aufgabe wird durch eine Scheibenbremse mit den Merkmalen des Anspruchs 1 gelöst.

Neben den rein baulichen Vorteilen, zu denen auch gehört, dass ein zur Verschleißerkennung notwendiger Potentiometer nach der Erfindung innerhalb des Bremssattels angeordnet werden kann, sind auch funktionale Vorteile zu nennen. Hierzu zählt insbesondere die Möglichkeit, eine Synchronisation der beiden Stellspindeln bereits vor der Komplettmontage der Bremse durchzuführen.

Hierzu ist gemäß der Erfindung jedes Treibrad zweiteilig ausgebildet, bestehend aus einem Außenrad, in das das Zugmittel eingreift, und einem Innenrad, die durch eine ineinander greifende Verzahnung verdrehsicher zueinander gehalten sind.

Während das Außenrad zum Formschluss mit dem Zugmittel, beispielsweise besagter Gliederkette oder einem Zahnriemen, eine Außenverzahnung mit relativ grober Zahnteilung aufweist, ist die Zahnteilung der Korrespondenzverzahnung Außenrad/Innenrad fein, d.h. klein gehalten, so dass eine sehr genaue Voreinstellung der Stellspindeln möglich ist.

Durch die vorteilhafte Weiterbildung der Nachstell- bzw. Synchronisiereinrichtung wird die Möglichkeit einer außerordentlich platzsparenden Unterbringung geschaffen. Dies erlaubt die Anordnung der Synchronisiereinrichtung innerhalb des Bremssattels, wobei diese auf der dem Bremsbelag zugewandten Seite der Brücke erfolgt, da auf der gegenüberliegenden Seite der Bremshebel an der Brücke anliegt.

Im Übrigen ragen die Stellspindeln in Richtung des Bremsbelages, d.h. in Richtung der angeschlossenen Druckstücke aus der Brücke heraus, wodurch ausreichend Platz für die Positionierung der Treibräder verbleibt, die drehbar auf angeformten Ansätzen der Brücke gelagert sind.

Durch die Unterbringung der Synchroneinrichtung innerhalb des Bremssattels wird dieser bzw. die Scheibenbremse insgesamt nicht nur kompakter, sondern es kann auch auf den Einsatz eines außenseitigen Verschlussdeckels verzichtet werden, ebenso wie auf bisher notwendige Dichtungsmaßnahmen im Bremssattel hin zu dem Verschlussdeckel.

Naturgemäß sind damit durchaus bemerkenswerte Kostenersparnisse zu erzielen, die vor allem deshalb auch bedeutsam sind, weil Scheibenbremsen als Serienteile in großen Stückzahlen hergestellt werden.

Das mindestens eine Formschlusselement, mit dem das jeweilige Treibrad verdrehsicher, jedoch axial verschiebbar an der zugeordneten Stellspindel gehalten ist, wobei das Formschlusselement an einer außenseitigen Axialführung, vorzugsweise in einer Axialnut oder an einer Führungsfläche der Stellspindel geführt ist, kann aus einer Kugel, einer Passfeder oder einem vergleichbaren Bauteil bestehen, das im Treibrad gehalten ist.

Eine Kugel eignet sich insbesondere deshalb sehr gut, weil sie reibungsarm-beider Verstellung der Stellspindel wirkt.

Bevorzugt weist jede Stellspindel mehrere, vorzugsweise in gleichem Winkelabstand zueinander angeordnete Axialführungen auf, an denen jeweils mindestens ein Formschlusselement geführt ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer perspektivischen Ansicht
- Figur 2: den Teil nach Figur 1 in einer Explosionsdarstellung
- Figur 3: einen Schnitt durch den Teil der Scheibenbremse gemäß der Linie III-III in Figur 1.

In den Figuren ist als ein Teil einer Zuspanneinrichtung einer Scheibenbremse für ein Nutzfahrzeug eine Brücke 1 dargestellt, die in einem Bremssattel der Scheibenbremse positionierbar ist und mit der Bremsbeläge an eine Bremsscheibe pressbar sind.

Hierzu sind zwei parallel und abständig zueinander angeordnete Stellspindeln 3 in der Brücke 1 gehalten, an deren einem Ende Druckstücke gelagert sind, über die bei einer Verschiebung der Zuspanneinrichtung die Bremsbeläge an die Bremsscheibe gepresst werden.

Über eine im Bremssattel positionierte Nachstelleinrichtung ist eine axiale Verstellung der Stellspindeln 3 zum Ausgleich einer verschleißbedingten Änderung eines Lüftspiels zwischen dem Bremsbelag und der Bremsscheibe möglich. Hierzu sind die Stellspindeln 3 und die zugeordneten Bohrungen der Brücke 1 mit ineinander greifenden Gewinden 5 versehen, so dass bei Betätigung der Nachstelleinrichtung durch Verdrehen der Stellspindeln 3 diese axial in Richtung des Bremsbelages bewegt werden.

Um eine gleichmäßige Verstellung beider Stellspindeln 3 zu gewährleisten, ist eine Synchronisiereinrichtung 2 vorgesehen, mit einem Zugmitteltrieb, bestehend aus zwei Treibrädern 6 und einem Zugmittel 7, wobei jeweils ein Treibrad 6 verdrehsicher an der Stellspindel 3 und axial gesichert an einer Lagerstelle der Brücke 1 gehalten ist.

Die Treibräder 6 sind auf der dem Bremsbelag zugewandten Seite der Brücke 1 angeordnet, wobei eine Verschlussplatte 4 das Innere des Bremssattels im Durchtrittsbereich der Stellspindeln 3 verschließt. Zur Abdichtung des Durchtrittsbereichs ist mit der Verschlussplatte 4 ein Balg 19 verbunden, der mit einer Dichtfläche an der Stellspindel 3 anliegt und der gegenüber dem Treibrad 6 eine Dichtung 14 trägt, mit angeformten Zungen 20.

Gemäß der Erfindung weist jede der Stellspindeln 3 außenseitig Axialführungen, im Beispiel in Form von Axialnuten 11 auf, in denen jeweils mindestens ein Formschlusselement 10 des zugeordneten Treibrades 6 einliegt. Dabei besteht das Formschlusselement 10 aus einer Kugel, die frei drehbar im Treibrad 6 sowie in der Axialnut 11 gehalten ist. Bei der dargestellten Ausführungsvariante sind in jeder Stellspindel 3 drei Axialnuten 11 vorgesehen, die in einem Winkel von 120° zueinander versetzt angeordnet sind.

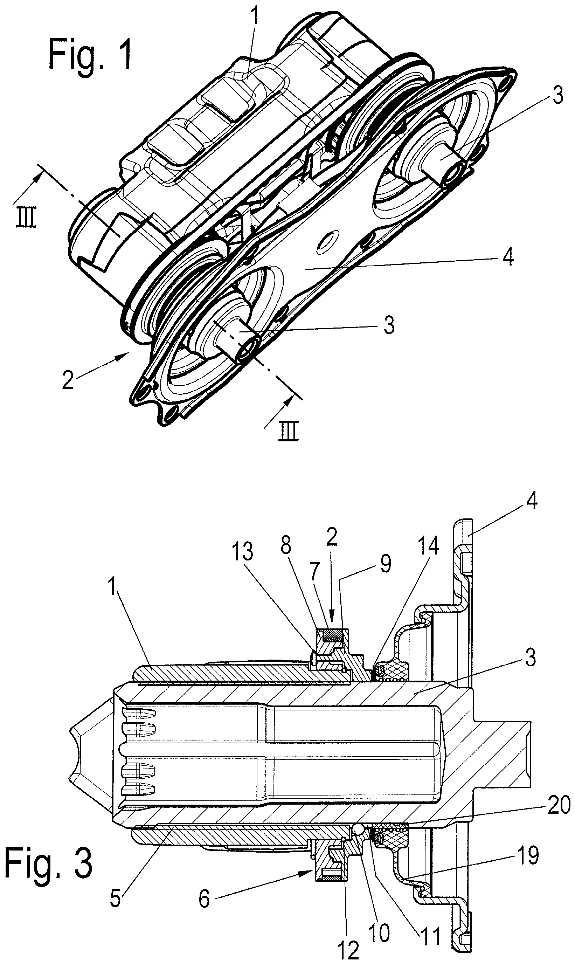

Wie insbesondere in der Figur 3 sehr deutlich zu erkennen ist, ist das Treibrad 6 zweiteilig ausgebildet und besteht aus einem Innenrad 9, in dem die Formschlusselemente 10 gehalten sind, sowie einem Außenrad 8, in das das Zugmittel 7 formschlüssig eingreift.

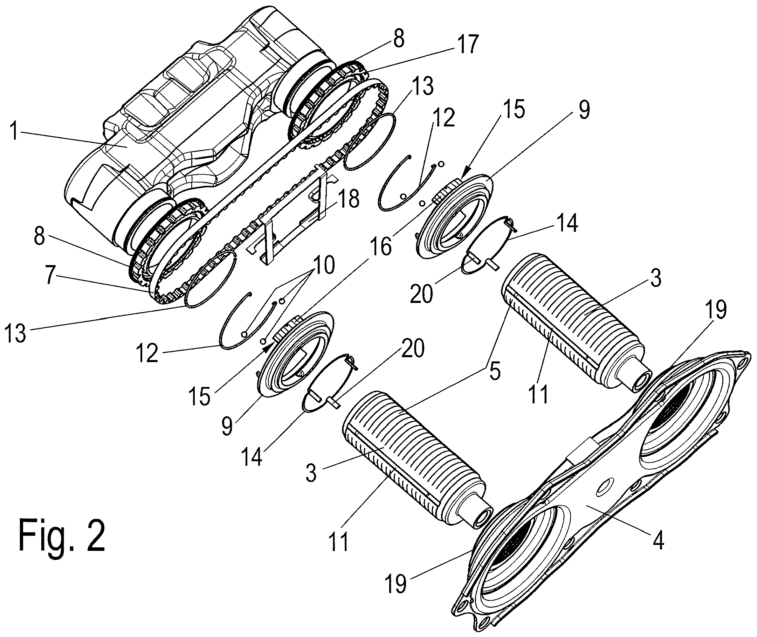

Das Innenrad 9 weist axial vorstehende, über den Umfang gleichmäßig verteilte Laschen 15, jeweils mit einer Außenverzahnung 16 auf (Figur 2), die in eine Innenverzahnung 17 des Außenrades 8 eingreifen, so dass bei einer Vormontage der Synchronisiereinrichtung 2 eine sehr genaue Einstellung der Stellspindeln 3 zueinander möglich ist.

Zur axialen Verschiebesicherung des Treibrades 6 ist sowohl an der dem Innenrad 9 abgewandten Stirnseite des Treibrades 6 ein anliegender Klemmring 13 wie auch gegenüberliegend eine Klammer 12 vorgesehen, die an der Brücke 1 formschlüssig gehalten ist und am Treibrad 6 angreift.

Die bereits erwähnten Zungen 20 der Dichtung 14 liegen dichtend in jeweils einer Axialnut 11 ein.

Mittels eines Spanners 18, der an zumindest einem Trum des Zugmittels 7 anliegt, ist dieses unter Spannung gehalten.

### Bezugszeichenliste

- 1: Brücke
- 2: Synchronisiereinrichtung
- 3: Stellspindel
- 4: Verschlussplatte
- 5: Gewinde
- 6: Treibrad
- 7: Zugmittel
- 8: Außenrad
- 9: Innenrad
- 10: Formschlusselement
- 11: Axialnut
- 12: Klammer
- 13: Klemmring
- 14: Dichtung
- 15: Lasche
- 16: Außenzähne
- 17: Innenzähne
- 18: Spanner
- 19: Balg
- 20: Zunge

## Patentansprüche

1. Scheibenbremse für ein Nutzfahrzeug mit
a) einem eine Bremsscheibe übergreifenden Bremssattel,
b) einer im Bremssattel angeordneten Zuspanneinrichtung zum Andrükken von Bremsbelägen an die Bremsscheibe,
c) zwei parallel und abständig zueinander angeordneten Stellspindeln (3), die in einer Brücke (1) an der die Zuspanneinrichtung angreift, mittels eines Korrespondenzgewindes verdrehbar gelagert sind,
d) einer im Bremssattel positionierten Nachstelleinrichtung, mit der über eine axiale Verstellung der Stellspindeln (3) eine verschleißbedingte Änderung eines Lüftspiels zwischen dem Bremsbelag und der Bremsscheibe im Wesentlichen ausgleichbar ist, sowie
e) einer Synchroneinrichtung (2) mit einem Zugmitteltrieb, mit dem die beiden Stellspindeln (3) synchron verstellbar sind, wobei
f) der Zugmitteltrieb ein Zugmittel (7) aufweist, das kraftübertragend an Treibrädern (6) angreift, die verdrehfest mit den Stellspindeln (3) in Wirkverbindung stehen,
**dadurch gekennzeichnet, dass**
g) jedes Treibrad (6) zweiteilig ausgebildet ist und aus einem Außenrad (8) und einem an der Stellspindel (3) verdrehfest gehaltenen Innenrad (9) besteht, die durch eine ineinander greifende Verzahnung verdrehsicher zueinander gehalten sind und
h) ein Potentiometer zur Verschleißerkennung innerhalb des Bremssattels angeordnet ist.

2. Scheibenbremse nach Anspruch 1, **dadurch gekennzeichnet, dass** die Verzahnung eine kleinere Zahnteilung aufweist als eine mit dem Zugmittel (7) in Eingriff stehende Verzahnung des Treibrades (6).

3. Scheibenbremse nach Anspruch 1 oder 2, **dadurch gekennzeichnet, dass** die Synchroneinrichtung (2) auf der dem Bremsbelag zugewandten Seite der Brücke (1) angeordnet ist, wobei jedes Treibrad (6) mindestens ein Formschlusselement (10) aufweist, dass an einer außenseitigen Axialführung der zugeordneten Stellspindel (3) angreift.

4. Scheibenbremse nach Anspruch 3, **dadurch gekennzeichnet, dass** bei Anordnung mehrerer Axialführungen diese in gleichem Winkelabstand zueinander angeordnet sind.

5. Scheibenbremse nach Anspruch 3, **dadurch gekennzeichnet, dass** das Formschlusselement (10) aus einer Kugel, Passfeder oder dergleichen besteht.

6. Scheibenbremse nach Anspruch 3, **dadurch gekennzeichnet, dass** die Axialführung als Führungsfläche oder Axialnut (11) ausgebildet ist.

7. Scheibenbremse nach Anspruch 1, **dadurch gekennzeichnet, dass** das Innenrad (9) Laschen (15) mit einer Außenverzahnung (16) aufweist, die in eine Innenverzahnung (17) des Außenrades (8) eingreift.

8. Scheibenbremse nach einem der vorhergehenden Ansprüche, **dadurch gekennzeichnet, dass** das Treibrad (6) verdrehbar, jedoch axial gesichert an der Brücke (1) gelagert ist.

9. Scheibenbremse nach einem der vorhergehenden Ansprüche, **dadurch gekennzeichnet, dass** das zwischen dem Treibrad (6) und dem Verschlussdeckel (4) oder einem daran angeschlossenen Balg (19) eine Dichtung (14) angeordnet ist.

10. Scheibenbremse nach einem der vorhergehenden Ansprüche, **dadurch gekennzeichnet, dass** die Dichtung (14) Zungen (20) aufweist, die dichtend in den Radialnuten (11) der Stellspindeln (3) einliegen.

## Claims

1. Disc brake for a commercial vehicle, comprising
a) a brake calliper encompassing a brake disc,
b) an application device which is arranged in the brake calliper for pressing brake pads onto the brake disc,
c) two control spindles (3) which are arranged parallel to one another and at a distance from one another and are mounted rotatably by means of a correspondence thread in a bridge (1), on which the application device acts,
d) an adjusting device which is positioned in the brake calliper and by way of which a wear-induced change in a clearance between the brake pad and the brake disc can be compensated for substantially via an axial adjustment of the control spindles (3), and
e) a synchronising device (2) with a traction mechanism drive, by way of which the two control spindles (3) can be adjusted synchronously,
f) the traction mechanism drive having a traction mechanism (7) which acts in a force-transmitting manner on drive wheels (6) which are in non-rotatable operative connection with the control spindles (3),
**characterised in that**
g) each drive wheel (6) is designed in two parts and consists of an outer wheel (8) and an inner wheel (9) non-rotatably held on the control spindle (3), which are held non-rotatably relative to one another by a meshing toothing system, and
h) a potentiometer for wear detection is located within the brake calliper.

2. Disc brake according to claim 1, **characterised in that** the toothing system has a smaller tooth pitch than a toothing system of the drive wheel (6) which is in engagement with the traction mechanism (7).

3. Disc brake according to claim 1 or 2, **characterised in that** the synchronising device (2) is located on the side of the bridge (1) which faces the brake pad, each drive wheel (6) having at least one positive locking element (10), which acts on an external axial guide of the associated control spindle (3).

4. Disc brake according to claim 3, **characterised in that,** if several axial guides are provided, they are arranged at an identical angular spacing from one another.

5. Disc brake according to claim 3, **characterised in that** the positive locking element (10) consists of a ball, feather key or the like.

6. Disc brake according to claim 3, **characterised in that** the axial guide is configured as a guide face or axial groove (11).

7. Disc brake according to claim 1, **characterised in that** the inner wheel (9) has brackets (15) with an external toothing system (16) which engages with an internal toothing system (17) of the outer wheel (8).

8. Disc brake according to any of the preceding claims, **characterised in that** the drive wheel (6) is mounted on the bridge (1) in a rotatable but axially secured manner.

9. Disc brake according to any of the preceding claims, **characterised in that** a seal (14) is arranged between the drive wheel (6) and the closure cover (4) or a bellows (19) which is connected thereto.

10. Disc brake according to any of the preceding claims, **characterised in that** the seal (14) has tongues (20) which lie in the radial grooves (11) of the control spindles (3) while forming a seal.

## Revendications

1. Frein à disque pour un véhicule utilitaire, comprenant
a) un étrier de frein enjambant un disque de frein,
b) un dispositif de serrage monté dans l'étrier de frein pour pousser des garnitures de frein sur le disque de frein,
c) deux broches (3) de réglage, qui sont parallèles et à distance l'une de l'autre, qui sont montées avec possibilité de tourner, au moyen d'un filetage correspondant, dans un pontet (1) qu'attaque le dispositif de serrage,
d) un dispositif de rattrapage, qui est placé dans l'étrier de frein et par lequel, par l'intermédiaire d'un déplacement axial des broches (3) de réglage, une variation due à l'usure d'un jeu de garnitures, entre la garniture de frein et le disque de frein, peut être sensiblement compensée, ainsi que
e) un dispositif (2) de synchronisation ayant un actionnement par moyen de traction, par lequel les deux broches (3) de réglage peuvent être déplacées en synchronisme, dans lequel
f) l'actionnement par moyen de traction a un moyen (7) de traction, qui attaque, avec transmission de force, des roues (6) motrices en liaison d'action, sans possibilité de torsion, avec les broches (3) de réglage,
**caractérisé en ce que**
g) chaque roue (6) motrice est constituée en deux parties et est constituée d'une roue (8) extérieure et d'une roue (9) intérieure maintenue sans possibilité de torsion sur la broche (3) de réglage, qui sont maintenues l'une par rapport à l'autre, sans possibilité de torsion, par une denture en engrènant l'une dans l'autre et
h) un potentiomètre de détection de l'usure est disposé à l'intérieur de l'étrier de frein.

2. Disque de frein suivant la revendication 1, **caractérisé en ce que** la denture a un pas de dent plus petit qu'une denture, en prise avec le moyen (7) de traction, de la roue (6) motrice.

3. Disque de frein suivant la revendication 1 ou 2, **caractérisé en ce que** le dispositif (2) de synchronisation est disposé du côté, tourné vers la garniture de frein, du pontet (1), chaque roue (6) motrice ayant au moins un élément (10) à complémentarité de forme, qui attaque un guidage axial, du côté extérieur, de la broche (3) de réglage associée.

4. Disque de frein suivant la revendication 3, **caractérisé en ce que**, pour un agencement de plusieurs guidages axiaux, ceux-ci sont disposés à une même distance angulaire les uns par rapport aux autres.

5. Disque de frein suivant la revendication 3, **caractérisé en ce que** l'élément (10) à complémentarité de forme est constitué d'une bille, d'un ressort d'ajustage ou analogue.

6. Disque de frein suivant la revendication 3, **caractérisé en ce que** le guidage axial est constitué sous la forme d'une surface de guidage ou d'une rainure (11) axiale.

7. Disque de frein suivant la revendication 1, **caractérisé en ce que** la roue (9) intérieure a des languettes (15) ayant une denture (16) extérieure, qui engrène dans une denture (17) intérieure de la roue (8) extérieure.

8. Disque de frein suivant l'une des revendications précédentes, **caractérisé en ce que** la roue (6) motrice est montée avec possibilité de tourner, mais fixée axialement sur le pontet (1).

9. Disque de frein suivant l'une des revendications précédentes, **caractérisé en ce qu'**une garniture (14) d'étanchéité est montée entre la roue (6) motrice et le couvercle (4) de fermeture ou un soufflet (19), qui y est raccordé.

10. Disque de frein suivant l'une des revendications précédentes, **caractérisé en ce que** la garniture (14) d'étanchéité a des languettes (20), qui pénètrent avec étanchéité dans les rainures (11) radiales des broches (3) de réglage.
